# EUROPÄISCHE PATENTSCHRIFT

(11) **EP 2 550 670 B1**
(45) Veröffentlichungstag und Bekanntmachung des Hinweises auf die Patenterteilung: **23.12.2020**
(21) Anmeldenummer: 11712473.5
(22) Anmeldetag: 25.03.2011
(51) Int. Cl.: H01H 39/00, H02B 11/26, H02B 13/065

(54) **SCHALTANLAGE FÜR DIE MITTELSPANNUNG MIT KURZSCHLIEßEREINHEIT**
SWITCHGEAR ASSEMBLY FOR MEDIUM VOLTAGE HAVING A SHORT-CIRCUIT UNIT
INSTALLATION DE DISTRIBUTION ÉLECTRIQUE POUR LA MOYENNE TENSION COMPRENANT UNE UNITÉ DE COURT-CIRCUIT

(30) Priorität: 24.03.2011 DE 102011015066; 25.03.2010 DE 102010012827
(43) Veröffentlichungstag der Anmeldung: 30.01.2013
(73) Patentinhaber: ABB Schweiz AG, 5400 Baden (CH)
(72) Erfinder: BOZEK, Armin, 44289 Dortmund (DE); HALL, Quirin, 64646 Heppenheim (DE)
(74) Vertreter: Maiwald Patent- und Rechtsanwaltsgesellschaft mbH
(86) Internationale Anmeldenummer: PCT/EP2011/001523
(87) Internationale Veröffentlichungsnummer: WO 2011/116985

(56) Entgegenhaltungen:
- EP-A1- 1 432 090
- WO-A1-2009/092621
- DE-B3- 10 254 497
- DE-U1- 9 013 335
- DE-U1- 9 406 161
- DE-U1- 9 419 141
- ABB: "Germany: Retrofit Solutions Brochure", INTERNET CITATION, 6 December 2002 (2002-12-06), pages 1-24, XP002608468, Retrieved from the Internet: URL:http://www05.abb.com/global/scot/scot2 35.nsf/veritydisplay/8cbc764ff7c43d7cc1256 c87003eb4fe/$File/Retrofit%20Solutions%20- %20Germany.pdf [retrieved on 2010-11-05]
- ABB: "Germany: Original MV Equipment vs Retrofit Solution", INTERNET CITATION, 27 September 2004 (2004-09-27), pages 1-37, XP002608469, Retrieved from the Internet: URL:http://www05.abb.com/global/scot/scot2 35.nsf/veritydisplay/dcdabda1c37be6c4c1256 d98004b8aac/$File/DE%20Retrofit%20solution s.pdf [retrieved on 2010-11-05]
- TAVRIDA ELECTRIC EXPORT: "TEE products guide for retrofit and new installations", INTERNET CITATION, 28 November 2006 (2006-11-28), pages 1-50, XP002608470, Retrieved from the Internet: URL:http://www.lbt.cz/attachments/061101-p g-retrofit_tee_en.pdf [retrieved on 2010-11-05]
- Gentsch: "84 ABB review 2|10", , 9 September 2010 (2010-09-09), XP055587640, Retrieved from the Internet: URL:https://library.e.abb.com/public/0e511 a63c9eef5ebc12577990036b369/ABB%20Review%2 02-2010_72dpi.pdf?x-sign=pDncidF1VJwjoFNrw 1UTLFO0cKZFreEkYSJnG8DxaaK1a12eWHlYcWyRQJT 7AslB [retrieved on 2019-05-10]

## Beschreibung

Die Erfindung betrifft eine Schaltanlage für die Mittelspannung mit Kurzschließereinheit, gemäß Oberbegriff des Patentanspruches 1.

Mittelspannungsschaltanlagen mit Kurzschließereinheit sind bekannt. Störlichtbögen in Schaltanlagen der Mittelspannung sind so schnell wie möglich zu löschen. Konventionelle diesbezügliche Schutzgeräte haben eine Störlichtbogendauer von 200 bis 300 Millisekunden. Diese werden dann bekanntermaßen durch die Betätigung des einspeisenden Leistungsschalters gelöscht. Aufgrund der langen resultierenden Störlichtbogendauern können Beschädigungen an der Schaltanlage auftreten. Schnelle Schutzrelais reduzieren mit Strombegrenzern die Störlichtbogendauer auf 50 bis 100 Millisekunden. Aber auch dies ist noch zu lang.

Aus der DE 94 06 161 U1 sowie der EP 1432090 A1 sind Kurzschließereinheiten zum Einschieben in Schaltanlagen bekannt, bei denen die Kontaktierung der eingeschobenen Kurzschließer separat montiert werden muss.

Der Erfindung liegt die Aufgabe zugrunde, eine Mittelspannungsschaltanlage der gattungsgemäßen Art so weiter zu entwickeln, dass die Funktionalität eines extrem schnellen Kurzschließers auf leichte Weise mit implementiert, bzw leicht nachgerüstet werden kann.

Diese gestellte Aufgabe wird erfindungsgemäß durch die kennzeichnenden Merkmale des Anspruches 1 gelöst.

Ein weitere vorteilhafte Ausgestaltung besteht darin, dass die Kurzschließereinheit als zumindest teileingehauste Baueinheit vorgesehen ist, die nachträglich in die Schaltanlage, implementierbar ist. Hierdurch kann die direkte Verbindung zur Sammelschiene geschaffen werden.

Weiterhin ist vorteilhaft ausgestaltet, dass die Kurzschließer pyrotechnische Schalter sind. Dass heisst, dass der Schaltvorgang dieser Schalter mit einer pyrotechnischen Zündladung betrieben werden, so dass extrem kurze Schaltzeiten entstehen. Hierdurch und durch Verwendung einer schnellen Sensorelektronik sind nunmehr Schaltzeiten von maximal 4 Millisekunden möglich. Damit können Störlichtbögen bereits in der Entstehung gelöscht werden.

In weiterer vorteilhafter Ausgestaltung ist angegeben, dass eine die Kurzschließereinheit steuernde Elektronikeinheit vorgesehen ist, die als Moduleinheit nachrüstbar ausgestaltet ist. Diese Elektronikeinheit ist enthält dabei die Auslöseelektronik der Kurzschließereinheit.

In letzter vorteilhafter Ausgestaltung ist angegeben, dass die Elektronikeinheit mindestens zwei Signal-Eingänge der Lichterfassung und mindestens drei Signaleingänge der Strom- oder Fehlerstromerfassung aufweist. Die entsprechenden Sensoren können innerhalb der Schaltanlage verteilt angeordnet sein. Auf diese Weise ist eine exakte Bestimmung des Fehlerortes möglich. Auch ist ein Testmodus zur Selbstüberprüfung des Systemes möglich.

Ein Ausführungsbeispiel zeigt die Zeichnung.

Es zeigt:
- Figur 1:: Kurzschließermodul mit Gehäuse
- Figur 2:: wie Figur 1 aber ohne Gehäuse
- Figur 3:: Schaltanlage
- Figur 4:: Schaltanlage
- Figur 5:: Geöffneter Zustand einer Mittelspannungsschaltanlage

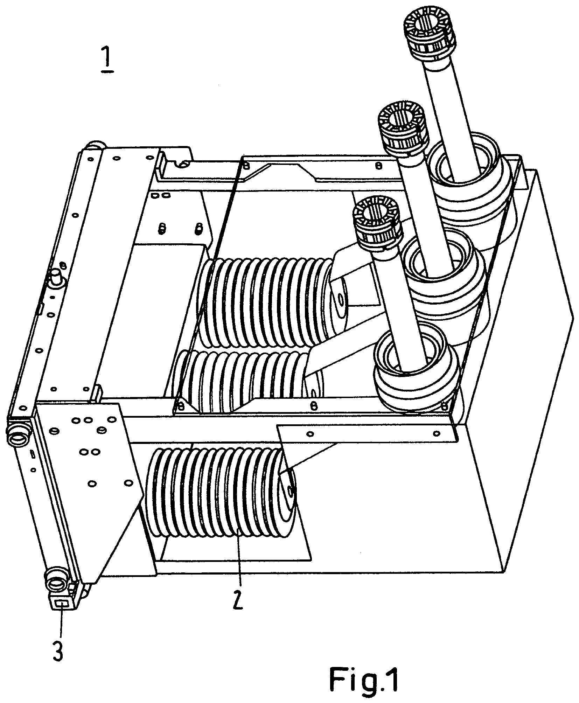

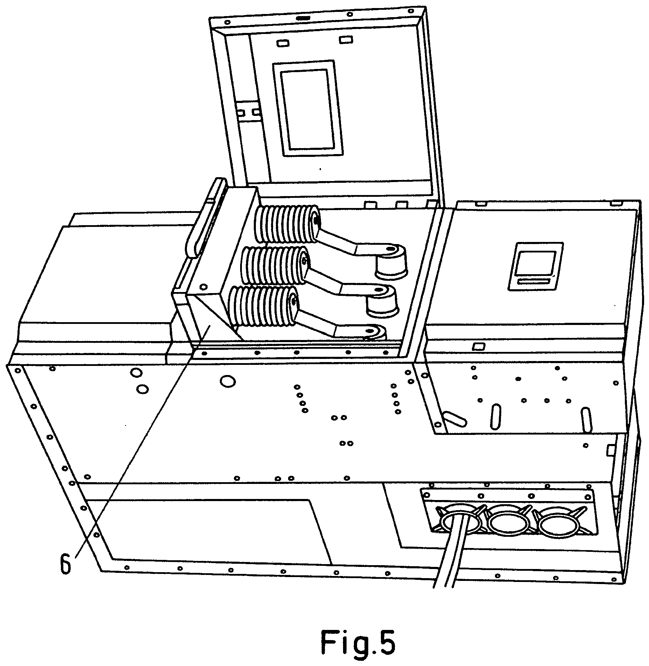

Figur 1 zeigt einen erfindungsgemäßen Kurzschließer 1, welcher dreiphasig ausgeführt ist und als Einheit auf einem Support 3 angeordnet ist. Dieser Support wiederum umfasst in einer Ausgestaltung integral eine Ein- und Ausfahrbühne, die mit dem öffenbaren Ausschnitt der Schaltanlage bzw des Schaltanlagengehäuses korrespondiert, so wie es in Figur 5 dargestellt ist. Die oben herausragenden Kontakte korrespondieren im Einschiebvorgang dann mit den Einfahrtulpen bekannter Art, so dass in der Einfahrendstellung eine elektrische Verbindung der Kontakt-Einfahrtulpenanordnung 10 gegeben ist.

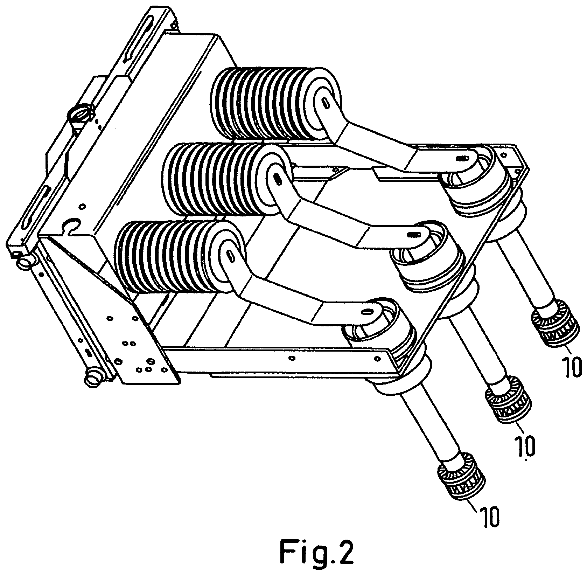

Figur 2 zeigt die Darstellung gemäß Figur 1 nochmals ohne Gehäuse. Figur 1 stellt hingegen in einer Durchsichtdarstellung das besagte, zumindest teilgeschlossene Gehäuse dar, so dass sich ein eingehaustes Kurzschließermodul ergibt. Ein solches Modul kann auch von außen an die Schaltanlage angebracht werden. Figur 2 hingegen zeigt die offene Ausführung, die bspw dann in die Schaltanlage bzw das Schaltanlagengehäuse implementierbar ist.

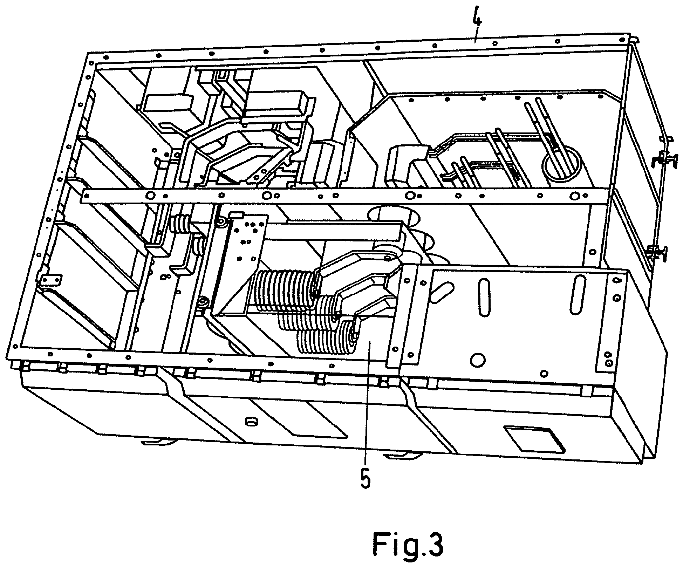

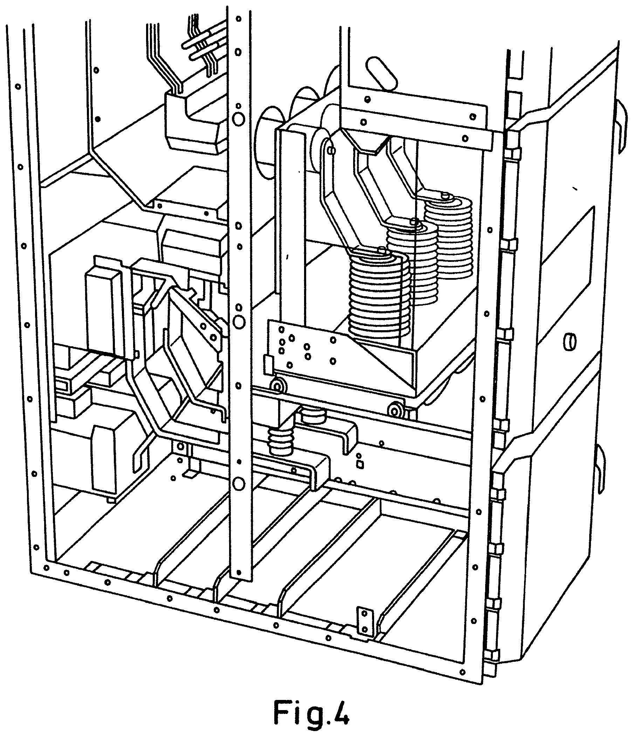

Figur 3 zeigt einen seitlichen Einblick in das Schaltanlagengehäuse 4 mit dem öffenbaren Ausschnitt 5, und das in Betriebsposition eingefahrene Kurzschließermodul. Figur 4 zeigt dies nochmal detaillierter.

Figur 5 zeigt den geöffneten Zustand des Gehäuses der Mittelspannungsschaltanlage und die teilweise eingefahrene Kurschließereinheit. Die fahrbare Bühne 6 lässt sich wie eine Schieblade ein- und ausfahren, wobei innerhalb des Gehäuses der Schaltanlage beim Einfahren die kontaktierende Verbindung der Kontakte über die Einfahrtulpen geschlossen, und bei Ausfahren diese Verbindung wieder geöffnet wird.

Die oben erwähnte Elektronik zur Steuerung der Kurzschließereinheit kann in den Steuerungsteil der Schaltanlage mit aufgenommen werden, oder es kann ein separater Ausschnitt im Schaltanlagengehäuse vorgesehen sein, in welchem diese platziert wird. Die besagten optischen Sensoren sind innerhalb des Schaltanlagengehäuses dort platziert, wo sie den Lichtbogen erfassen können.

## Patentansprüche

1. Schaltanlage für die Mittelspannung mit Kurzschließereinheit zur Löschung von Störlichtbögen, **dadurch gekennzeichnet,**
**dass** die Kurzschließer (1) als dreiphasige Einheit auf einem Support (3) als Kurzschließereinheit angeordnet sind, welcher in einen öffenbaren Ausschnitt (5) eines Schaltanlagengehäuses (4) über eine Einschub-/Ausschubbühne (6) beweglich ein- und ausschiebbar ist, indem die Kurzschließereinheit (1) mit Einfahrtulpen (10) versehen ist, die mit festen Kontaktstellen innerhalb des Schaltanlagengehäuses (4) beim Einschieben kontaktierend korrespondieren.

2. Schaltanlage nach Anspruch 1,
**dadurch gekennzeichnet,**
**dass** die Kurzschließereinheit (1) als zumindest teileingehauste Baueinheit vorgesehen ist, die nachträglich in die Schaltanlage implementierbar ist.

3. Schaltanlage nach Anspruch 1 oder 2
**dadurch gekennzeichnet,**
**dass** die Kurzschließer pyrotechnische Schalter (2) sind.

4. Schaltanlage nach einem der vorhergehenden Ansprüche,
**dadurch gekennzeichnet,**
**dass** eine die Kurzschließereinheit (1) steuernde Elektronikeinheit (11) vorgesehen ist, die als Moduleinheit nachrüstbar ausgestaltet ist.

5. Schaltanlage nach Anspruch 4,
**dadurch gekennzeichnet,**
**dass** die Elektronikeinheit (11) mindestens zwei Signal-Eingänge (12) zur Lichterfassung und mindestens 3 Signaleingänge zur Strom- oder Fehlerstromerfassung (13) aufweist.

## Claims

1. Medium-voltage switchgear assembly having a short-circuiting unit for extinguishing arc faults,
**characterized**
**in that** the short-circuiting devices (1) are arranged as a three-phase unit on a support (3) which can be inserted into and withdrawn from an openable section (5) of a switchgear assembly housing (4) movably by means of an insertion/withdrawal platform (6) by virtue of the short-circuiting unit (1) being provided with insertion tulips (10) which correspond to fixed contact points within the switchgear assembly housing (4) in such a way as to make contact upon insertion.

2. Switchgear assembly according to Claim 1,
**characterized**
**in that** the short-circuiting unit (1) is provided as an at least partially encased structural unit which can be implemented retrospectively into the switchgear assembly.

3. Switchgear assembly according to Claim 1 or 2,
**characterized**
**in that** the short-circuiting devices are pyrotechnic switches (2).

4. Switchgear assembly according to one of the preceding claims,
**characterized**
**in that** an electronics unit (11) is provided which controls the short-circuiting unit (1) and is retrofittable as a module unit.

5. Switchgear assembly according to Claim 4,
**characterized**
**in that** the electronics unit (11) has at least two signal inputs (12) for light detection and at least 3 signal inputs for current or fault-current detection (13).

## Revendications

1. Installation de commutation pour moyenne tension comprenant une unité de court-circuit destinée à l'extinction d'arcs électriques parasites,
**caractérisée en ce que**
les court-circuiteurs (1) se présentant sous la forme d'une unité triphasée sont disposés sur un support (3) se présentant sous la forme d'une unité de court-circuit, lequel support peut être inséré dans une découpe (5), pouvant être ouverte, d'un boîtier d'installation de commutation (4), et être retiré de celle-ci, par le biais d'une plate-forme d'insertion/de retrait (6) du fait que l'unité de court-circuit (1) est pourvue de tulipes d'insertion (10) qui correspondent à des points de contact fixes situés à l'intérieur du boîtier d'installation de commutation 4) de manière à venir en contact lors de l'insertion.

2. Installation de commutation selon la revendication 1,
**caractérisé en ce que**
l'unité de court-circuit (1) est prévue sous la forme d'un module structurel au moins partiellement enfermé qui peut être implémenté ultérieurement dans l'installation de commutation.

3. Installation de commutation selon la revendication 1 ou 2,
**caractérisée en ce que**
les court-circuiteurs sont des commutateurs pyrotechniques (2).

4. Installation de commutation selon l'une des revendications précédentes,
**caractérisée en ce que**
une unité électronique (11) commandant l'unité de court-circuit (1) est prévue qui peut être conçue sous la forme d'une unité modulaire de manière à pouvoir être installée ultérieurement.

5. Installation de commutation selon la revendication 4,
**caractérisée en ce que**
l'unité électronique (11) comporte au moins deux entrées de signal (12) destinées à la détection de lumière et au moins 3 entrées de signal destinées à la détection de courant ou de courant de fuite (13).
